# EUROPEAN PATENT SPECIFICATION

(11) **EP 4 509 814 B1**
(45) Date of publication and mention of the grant of the patent: **23.09.2026**
(21) Application number: 23788077.8
(22) Date of filing: 07.03.2023
(51) Int. Cl.: G01M 13/04, F16C 19/36, F16C 19/52

(54) **BEARING DEVICE STATE DETECTION METHOD, DETECTION DEVICE, AND PROGRAM**
VERFAHREN ZUR ERKENNUNG DES ZUSTANDS EINER LAGERVORRICHTUNG, ERKENNUNGSVORRICHTUNG UND PROGRAMM
PROCÉDÉ DE DÉTECTION D'ÉTAT DE DISPOSITIF À ROULEMENTS, DISPOSITIF DE DÉTECTION ET PROGRAMME

(30) Priority: 13.04.2022 JP 2022066449
(43) Date of publication of application: 19.02.2025
(73) Proprietor: NSK Ltd., Tokyo 141-8560 (JP)
(72) Inventor: MARUYAMA, Taisuke, Fujisawa-shi, Kanagawa 251-8501 (JP); HORII, Yoji, Fujisawa-shi, Kanagawa 251-8501 (JP); NIWA, Misaki, Fujisawa-shi, Kanagawa 251-8501 (JP); IWASE, Shunsuke, Fujisawa-shi, Kanagawa 251-8501 (JP)
(74) Representative: Grünecker Patent- und Rechtsanwälte PartG mbB
(86) International application number: PCT/JP2023/008686
(87) International publication number: WO 2023/199655

(56) References cited:
- JP-A- 2019 211 317
- JP-A- 2019 211 317
- JP-A- 2020 159 754
- JP-A- 2020 159 754
- JP-A- 2020 193 968
- JP-A- 2020 193 968

## Description

### TECHNICAL FIELD

The present invention relates to a detection method for detecting a state of a bearing device according to the preamble of claim 1, a detection device for detecting a state of a bearing device according to the preamble of claim 5, and a corresponding program according to the preamble of claim 6. Such a detection method, such a detection device and such a program are known, for example, from JP 2020 193968 A.

### BACKGROUND ART

In the related art, in a bearing device, a configuration for lubricating rotation by using a lubricant (for example, a lubricating oil or a grease) is widely used. On the other hand, a rotating component such as a bearing device is periodically subjected to state diagnosis, so that damage or wear is detected at an early stage and occurrence of a failure or the like of the rotating component is suppressed.

In the bearing device using the lubricant, it is required to appropriately detect a state related to the lubricant in order to diagnose an operating state. For example, Patent Literature 1 discloses a method of applying a low DC voltage to a bearing and diagnosing an oil film state of the bearing based on a measured voltage. Further, Patent Literature 2 discloses a method of modeling an oil film as a capacitor, applying an AC voltage to a rotating ring of a bearing in a non-contact state, and estimating an oil film state of a bearing device based on a measured capacitance.

### CITATION LIST

### PATENT LITERATURE

Patent Literature 1: Japanese Utility Model Application No. 5-003685
Patent Literature 2: JP 4942496 B2

### SUMMARY OF INVENTION

### TECHNICAL PROBLEM

In recent years, there has been a demand for a lower torque for the bearing device. In response to the lower torque, the lubricant used in the bearing device has been reduced in viscosity and oil volume. On the other hand, for example, a larger load is applied to a bearing device used in a large-sized device such as a windmill. In such a situation, the possibility that the oil film inside the bearing device is broken or a metal contact ratio of a slide portion is increased. Therefore, it is required to appropriately detect a contact state between components inside the bearing device in addition to an oil film thickness. There are various configurations of the bearing used in the bearing device. Depending on the configuration, it is necessary to consider the contact state between the components around the lubricant. For example, examples of the bearing used in the bearing device include a tapered roller bearing. The tapered roller bearing may be provided with a collar on an inner ring side in order to stabilize (guide) positions of rolling elements. Since the collar and the rolling elements come into contact with each other when the tapered roller bearing operates, it is necessary to perform measurement in consideration of the contact.

In view of the above problems, an object of the present invention is to simultaneously and accurately detect an oil film thickness inside a bearing device including a tapered roller bearing and a metal contact ratio of a slide portion.

### SOLUTION TO PROBLEM

In order to solve the above problems, one aspect of the present invention is a detection method for detecting a state of a bearing device according to claim 1.

Another aspect of the present invention is a detection device for detecting a state of a bearing device according to claim 5.

Another aspect of the present invention is a program according to claim 6.

### ADVANTAGEOUS EFFECTS OF INVENTION

According to the present invention, it is possible to simultaneously and accurately detect an oil film thickness inside a bearing device including a tapered roller bearing and a metal contact ratio of a slide portion.

### BRIEF DESCRIPTION OF DRAWINGS

[FIG. 1] FIG. 1 is a schematic diagram showing an example of a device configuration at the time of diagnosis according to a first embodiment of the present invention.
[FIG. 2] FIG. 2 is a graph showing a physical model of a bearing device according to the first embodiment of the present invention.
[FIG. 3] FIG. 3 is a circuit diagram for explaining an equivalent circuit of the bearing device according to the first embodiment of the present invention.
[FIG. 4] FIG. 4 is a diagram for explaining a rolling element (ball) of the bearing device.
[FIG. 5] FIG. 5 is a diagram for explaining a rolling element (roller) of the bearing device.
[FIG. 6] FIG. 6 is a circuit diagram for explaining an effect of a collar of a tapered roller bearing.
[FIG. 7] FIG. 7 is a graph for explaining the effect of the collar of the tapered roller bearing.
[FIG. 8] FIG. 8 is a schematic diagram for explaining an effect of chamfering of the tapered roller bearing.
[FIG. 9A] FIG. 9A is a graph for explaining the effect of the chamfering of the tapered roller bearing.
[FIG. 9B] FIG. 9B is a graph for explaining the effect of the chamfering of the tapered roller bearing.
[FIG. 9C] FIG. 9C is a graph for explaining the effect of the chamfering of the tapered roller bearing.
[FIG. 10] FIG. 10 is a circuit diagram for explaining an equivalent circuit of the bearing device according to the first embodiment of the present invention.
[FIG. 11] FIG. 11 is a diagram for explaining a loaded zone and an unloaded zone according to the first embodiment of the present invention.
[FIG. 12A] FIG. 12A is a diagram for explaining capacitances in the loaded zone according to the first embodiment of the present invention.
[FIG. 12B] FIG. 12B is a diagram for explaining the capacitances in the loaded zone according to the first embodiment of the present invention.
[FIG. 13] FIG. 13 is a circuit diagram for explaining equivalent circuits according to the first embodiment of the present invention.
[FIG. 14] FIG. 14 is a flowchart of a processing at the time of measurement according to the first embodiment of the present invention.
[FIG. 15A] FIG. 15A is a graph showing measurement results according to the first embodiment of the present invention.
[FIG. 15B] FIG. 15B is a graph showing measurement results according to the first embodiment of the present invention.

### DESCRIPTION OF EMBODIMENTS

Hereinafter, embodiments of the present invention will be described with reference to the drawings. The embodiments described below are embodiments for explaining the present invention, and are not intended to be interpreted to limit the present invention, and all the configurations described in the embodiments are not necessarily essential configurations for solving the problems of the present invention. In the drawings, the same components are denoted by the same reference numerals, thereby showing a correspondence relation therebetween.

### <First Embodiment>

Hereinafter, a first embodiment of the present invention will be described. In the following description, as a rolling bearing, a tapered roller bearing in which a line contact may occur is described as an example, but the present invention is not limited thereto and can be applied to a rolling bearing having other configurations. For example, a method according to the present invention can be applied to a rolling bearing having the same collar as that of the tapered roller bearing therein and a device using such a rolling bearing. In addition, in the bearing device, a gear and the like may also be used as a configuration in which the line contact occurs, and the method can also be applied thereto.

### [Device Configuration]

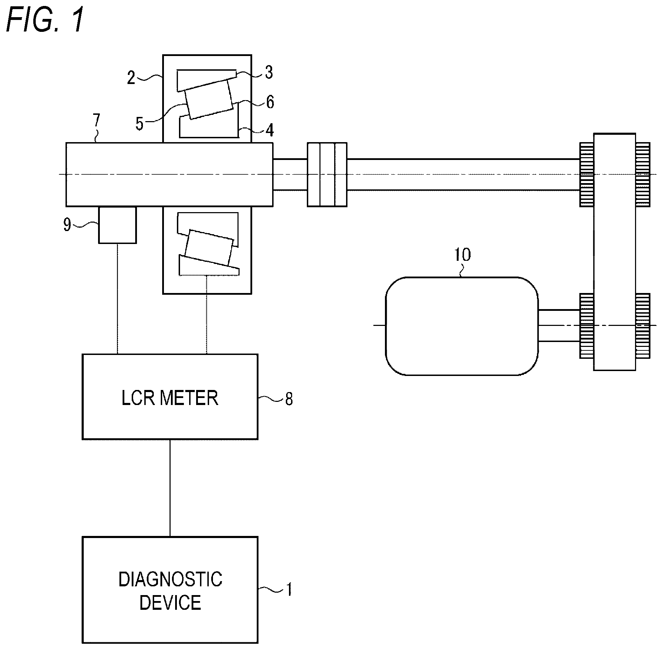

FIG. 1 is a schematic configuration diagram showing an example of an overall configuration when a diagnostic device 1 according to the present embodiment performs diagnosis. In FIG. 1, a bearing device 2 to which a diagnostic method according to the present embodiment is applied and a diagnostic device 1 that performs the diagnosis are provided. The configuration shown in FIG. 1 is an example, and different configurations may be used according to a configuration of the bearing device 2 and the like. Further, although a configuration in which the bearing device 2 includes one rolling bearing is shown in FIG. 1, the present invention is not limited thereto, and one bearing device 2 may include a plurality of rolling bearings.

In the bearing device 2, the rolling bearing that is a radial type tapered roller bearing can rotatably support a rotation shaft 7. The rotation shaft 7 is supported by a housing (not shown) that covers the outside of the rotation shaft 7 via the rolling bearing that is a rotating component. The rolling bearing includes an outer ring (an outer member) 3 which is a fixed ring internally fitted to the housing, an inner ring (an inner member) 4 which is a rotating ring externally fitted to the rotation shaft 7, a plurality of rollers which are a plurality of rolling elements 5 arranged between the inner ring 4 and the outer ring 3, and a retainer (not shown) that retains the rolling elements 5 such that the rolling elements 5 can roll freely. Here, although the configuration in which the outer ring 3 is fixed is used, a configuration in which the inner ring 4 is fixed and the outer ring 3 rotates may be used. Further, a collar 6 for stabilizing positions of the rolling elements 5 on a rolling surface is provided on an inner ring 4 side. In other words, the collar 6 is guided by the rolling surface of the rolling elements 5. In addition, although not shown in FIG. 1, a seal that is a peripheral member for preventing entry of dust into the periphery of the rolling elements 5 and leakage of a lubricating oil may be provided. In the rolling bearing, friction between the inner ring 4 (further, the collar 6) and the rolling elements 5 and friction between the outer ring 3 and the rolling elements 5 are reduced by a predetermined lubrication method. The lubrication method is not particularly limited, and for example, grease lubrication, oil lubrication, or the like is used and supplied to the inside of the rolling bearing. A type of a lubricant is also not particularly limited.

A motor 10 is a motor for driving, and supplies power by rotation to the rotation shaft 7. The rotation shaft 7 is connected to an LCR meter 8 via a rotation connector 9. The rotation connector 9 may be configured with, for example, a carbon brush, and is not limited thereto. Further, the bearing device 2 is also electrically connected to the LCR meter 8, and at this time, the LCR meter 8 also functions as an AC power supply for the bearing device 2.

The diagnostic device 1 operates as a detection device capable of executing a detection method according to the present embodiment. At the time of diagnosis, the diagnostic device 1 instructs the LCR meter 8 to use, as inputs, an angular frequency ω of the AC power supply and an AC voltage V, and acquires, as outputs corresponding thereto, an impedance |Z| (|Z| is an absolute value of Z) and a phase angle θ of the bearing device 2 from the LCR meter 8. Then, the diagnostic device 1 detects the oil film thickness and the metal contact ratio in the bearing device 2 by using these values. Details of the detection method will be described later.

The diagnostic device 1 may be implemented by, for example, an information processing device including a control device, a storage device, and an output device, which are not shown. The control device may include a central processing unit (CPU), a micro processing unit (MPU), a digital single processor (DSP), or a dedicated circuit. The storage device includes volatile and nonvolatile storage media such as a hard disk drive (HDD), a read only memory (ROM), and a random access memory (RAM), and may input and output various kinds of information in response to an instruction from the control device. The output device includes a speaker, a light, or a display device such as a liquid crystal display, and performs notification to an operator in response to an instruction from the control device. A notification method by the output device is not particularly limited, and for example, may be an auditory notification by voice or a visual notification by screen output. The output device may be a network interface having a communication function, and may perform a notification operation by transmitting data to an external device (not shown) via a network (not shown). For example, when abnormality diagnosis is performed based on a detection result, a notification content is not limited to a notification when an abnormality is detected, and may include a notification indicating that the bearing device 2 is normal.

### [Physical Model]

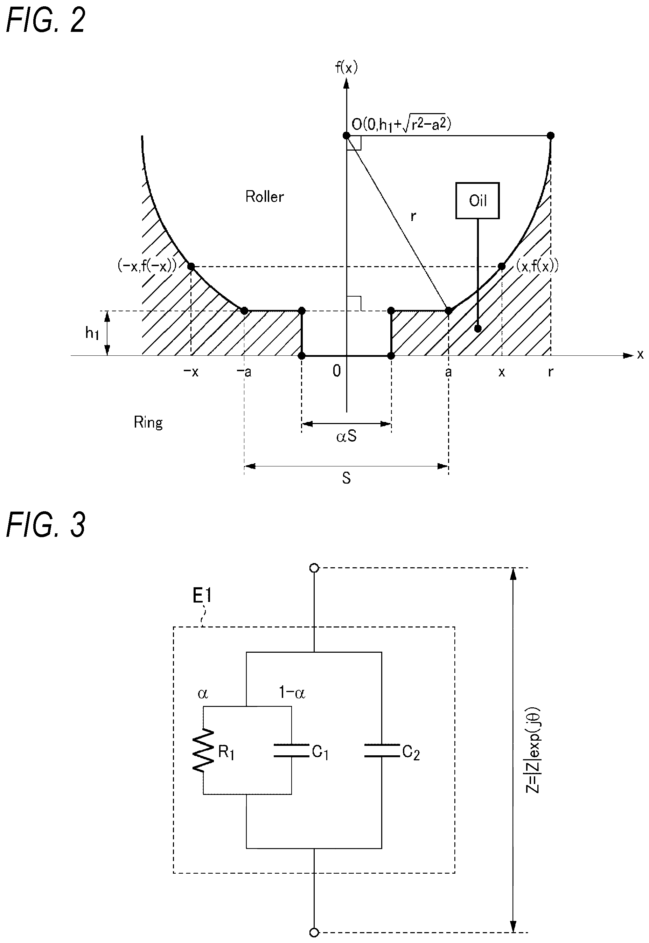

A contact state between the rolling elements 5 and the outer ring 3 (or the inner ring 4) in the bearing device 2 will be described with reference to FIG. 2. FIG. 2 is a graph showing a physical model when a roller segment and a ring segment are in contact with each other. The roller segment corresponds to the roller which is the rolling element 5, and the ring segment corresponds to the outer ring 3 (or the inner ring 4). A f(x) axis indicates a direction of the oil film thickness. Variables shown in FIG. 2 are as follows. In the following description, the same variables in equations are denoted by the same reference numerals to show a correspondence relation.
S: Hertzian contact area
a: contact width in transverse direction (here, x-axis direction) of roller segment (roller)
α: breakage rate (metal contact ratio) (0 ≤ α < 1) of oil film
r: radius of roller segment
αS: actual contact region (breakage region of oil film)
h: oil film thickness
h₁: oil film thickness in Hertzian contact region
O: rotation center of roller segment

In the Hertzian contact region, a ratio of an area in which a metal is in contact to an area in which the metal is not in contact is α: (1 - α). In an ideal state in which the roller segment and the ring segment are not in contact with each other, α = 0, and when x = 0, h > 0.

The oil film thickness h shown in FIG. 2 is expressed by the following Equation (1). $h = f \left(x\right) = {h}_{1} + √ \left({r}^{2}-{a}^{2}\right) - √ \left({r}^{2}-{x}^{2}\right) \left(-r\leq x<-a or a<x\leq r\right)$

In addition, in the Hertzian contact region, there may be a thin oil film region called a horseshoeshaped portion, and in the present embodiment, an average oil film thickness hₐ that is an average oil film thickness in the Hertzian contact region is used. Therefore, when the oil film is broken in the Hertzian contact region, hₐ is obtained by the following Equation (2). ${h}_{a} = \left(1-α\right) {h}_{1}$

In FIG. 2, O is x = 0, and coordinates of O in FIG. 2 are represented by O (0, h₁ + √(r² - a² )).

### [Equivalent Electric Circuit]

FIG. 3 is a diagram showing the physical model shown in FIG. 2 by an electrically equivalent electric circuit (equivalent circuit). An equivalent circuit E1 includes a resistor R₁, a capacitor C₁, and a capacitor C₂. The resistor R₁ corresponds to a resistor in the breakage region (= αS). The capacitor C₁ corresponds to a capacitor formed by an oil film in the Hertzian contact region, and has a capacitance C₁. The capacitor C₂ corresponds to a capacitor formed by an oil film in the vicinity of the Hertzian contact region (-r ≤ x < -a and a < x ≤ r in FIG. 2), and has a capacitance C₂. A contact area (= S) of the Hertzian contact region forms a parallel circuit of the resistor R₁ and the capacitor C₁ in the equivalent circuit E1 in FIG. 3. Further, the capacitor C₂ is connected in parallel to an electric circuit including the resistor R₁ and the capacitor C₁. At this time, it is assumed that the lubricant is filled in the vicinity of the Hertzian contact region (-r ≤ x < -a, and a < x ≤ r in FIG. 2).

An impedance of the equivalent circuit E1 is denoted by Z. Here, an AC voltage V applied to the equivalent circuit E1, a current I flowing through the equivalent circuit E1, and a complex impedance Z of the entire equivalent circuit E1 are expressed by the following Equations (3) to (5). $V = \left|V\right| exp \left(jωt\right)$ $I = \left|I\right| exp \left(j\left(ωt-θ\right)\right)$ $Z = V / I = \left|V/I\right| exp \left(jθ\right) = \left|Z\right| exp \left(jθ\right)$
J: imaginary number
ω: angular frequency of AC voltage
t: time
θ: phase angle (shift in phase between voltage and current)

As shown in Equation (5), the complex impedance Z is represented by two independent variables, that is, the absolute value |Z| of Z and the phase angle θ This means that two independent parameters (in the present embodiment, hₐ and α shown below) can be measured by measuring the complex impedance Z. The complex impedance Z of the entire equivalent circuit shown in FIG. 3 is expressed by the following Equation (6). ${Z}^{- 1} = {{R}_{1}}^{- 1} + jω \left({C}_{1}+{C}_{2}\right)$
R₁: resistance value of resistor R₁
C₁: capacitance of capacitor C₁
C₂: capacitance of capacitor C₂
|Z|: impedance in dynamic contact state

Further, the following Equation (7) and Equation (8) can be derived from Equation (6). ${R}_{1} = \left|Z\right| / cosθ$ $ω \left({C}_{1}+{C}_{2}\right) = - sinθ / \left|Z\right|$

Here, since R₁ in the Equation (7) has an inverse relation with the contact area, it can be expressed as the following Equation (9). ${R}_{1} = {R}_{10} / α$ R₁₀: resistance value at rest (that is, α = 1)

R₁₀ can be expressed by the following Equation (10). ${R}_{10} = \left|{Z}_{0}\right| / cos {θ}_{0}$
|Z₀|: impedance in static contact state
θ₀: phase angle in static contact state

Therefore, the breakage rate α can be expressed as the following Equation (11) from Equation (7), Equation (9), and Equation (10). When θ₀ is the phase angle in the static contact state as described above, θ can be regarded as a phase angle in the dynamic contact state.
[Math. 1] $α = \frac{\left|{Z}_{0}\right| cos θ}{\left|Z\right| {cosθ}_{0}}$

On the other hand, C₁ in Equation (6) and Equation (8) can be expressed as the following Equation (12). In a case in which the line contact is assumed, the contact area S of the Hertzian contact region shown in FIG. 2 is S = 2aL when the length (here, a contact width in a longitudinal direction) of the roller, which is the rolling element 5, is L.
[Math. 2] ${C}_{1} = \frac{ε \left(1-α\right) S}{{h}_{1}} = \frac{2 ε \left(1-α\right) aL}{{h}_{1}}$
ε: dielectric constant of lubricant

Further, C₂ in Equation (6) and Equation (8) can be expressed as the following Equation (13).
[Math. 3] ${C}_{2} = 2 ε {\int }_{a}^{r} \frac{Ldx}{f \left(x\right)} \approx 2 πεL \sqrt{\frac{r}{2 {h}_{1}}}$

### [Capacitance According to Contact State]

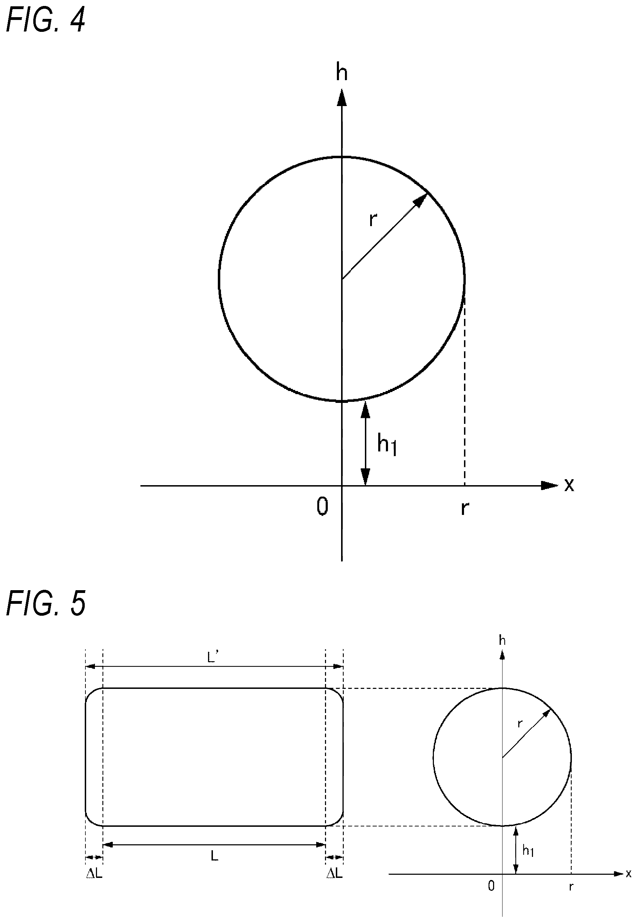

Here, C₂ in the point contact will be described. FIG. 4 is a diagram for explaining a case in which the rolling elements are balls (for example, a ball bearing). Here, a value of h₁ is shown as a large value for ease of description, but actually, as shown in FIG. 2, the value is small enough to generate a contact (the point contact in this case). In this case, the point contact may occur between the rolling elements and a track portion. Similarly to FIG. 2, when the radius of the rolling element is set to r and the oil film thickness is set to h₁, the capacitance of the capacitor C₂ in the equivalent circuit shown in FIG. 3 can be calculated by the following Equation (14).
[Math. 4] ${C}_{2} = 2 πεγ ln \left(\frac{r}{{h}_{1}}\right)$
π: pi
r: radius of ball
ε: dielectric constant of lubricant
ln: logarithmic function

Next, a case in which the line contact to be handled in the present embodiment occurs will be described. FIG. 5 is a diagram for explaining a case in which the rolling elements are rollers (for example, the tapered roller bearing). Here, similarly to FIG. 4, the value of h₁ is shown as a large value for ease of description, but actually, as shown in FIG. 2, the value is small enough to generate a contact (the line contact in this case). In this case, the line contact may occur between the rolling elements and the track portion. Similarly to FIG. 2, when the radius of the rolling element is set to r and the oil film thickness is set to h₁, the capacitance of the capacitor C₂ in the equivalent circuit shown in FIG. 3 can be calculated by the above Equation (13).

As shown in FIG. 5, the roller used in the rolling bearing may be formed by chamfering edges. In this case, a straight portion in which the line contact may occur may be handled as L. When a length ΔL in the longitudinal direction due to the chamfering is extremely small with respect to L, the capacitor C₂ may be calculated by using a length L' (= L + 2ΔL) including chamfered portions. Details of an effect of the chamfered portions will be described later.

At this time, when the symbols shown in FIGs. 2 and 5 are used, a contact area by the line contact (that is, the contact area S of the Hertzian contact region) can be represented by 2aL as described above.

In addition, the point contact may occur in the chamfered portion instead of the line contact. Therefore, regarding this portion, the capacitor C₂ may be further added to the calculation formula (13) by using the calculation formula (for example, the above Equation (14)) of C₂ caused by the point contact.

Here, an effect to be considered due to the configuration of the tapered roller bearing as shown in FIGs. 1 and 5 will be described. In the present embodiment, effects of the collar 6 of the tapered roller bearing and the chamfering shown in FIG. 5 will be examined. In this example, description will be given on the assumption that the collar 6 is provided on the inner ring 4 side, and no collar is provided on an outer ring 3 side.

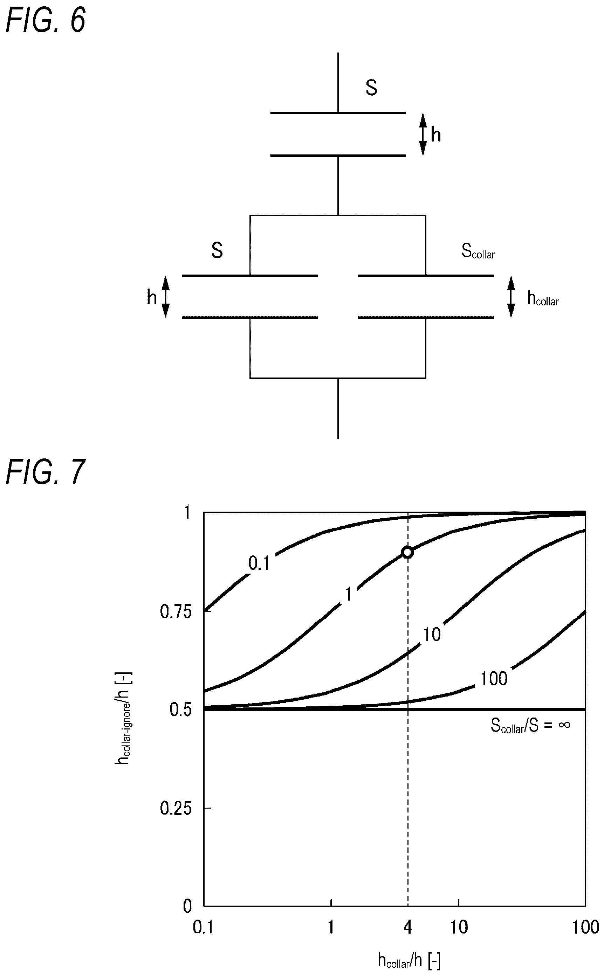

First, an effect of a capacitance caused by a contact between the collar 6 and the rolling elements 5 will be described. FIG. 6 is a diagram conceptually showing an equivalent circuit corresponding to the capacitance caused by a contact region generated around the rolling elements 5 (rollers). A circuit on an upper side in FIG. 6 shows a capacitor generated between the rolling elements 5 and the outer ring 3, a circuit on a lower left side shows a capacitor generated between the rolling elements 5 and a rolling surface of the inner ring 4, and a circuit on a lower right side shows a capacitor generated between the rolling elements 5 and the collar 6 of the inner ring 4. The two capacitors on the lower side are shown as parallel circuits. Here, for simplify of the description, description will be given on the assumption that the contact area S of the Hertzian contact region and the oil film thickness h of the capacitor on the lower left side and the capacitor on the lower right side are the same.

FIG. 7 is a graph for explaining the effect of the collar 6 based on the equivalent circuit shown in FIG. 6. In FIG. 7, the vertical axis indicates the ratio of an oil film thickness h_{collar-ignore} calculated by ignoring the capacitance generated in the collar 6 to the oil film thickness h (that is, an oil film thickness to be actually measured) between the rolling elements 5 and the rolling surface of the inner ring 4. In FIG. 7, the horizontal axis indicates the ratio of an oil film thickness h_{collar} generated on the collar 6 to the oil film thickness h between the rolling elements 5 and the rolling surface of the inner ring 4. The values on the graph indicate the ratio of a Hertzian contact area S_{collar} between the collar 6 and the rolling elements 5 to the Hertzian contact area S between the rolling elements 5 and the rolling surface of the inner ring 4.

For example, in consideration of a structure of the tapered roller bearing, it is assumed that the contact area between the rolling elements 5 and the collar 6 of the inner ring 4 is smaller than the contact area between the rolling elements 5 and the rolling surface of the inner ring 4. That is, it is assumed that S_{collar} < S. Then, referring to FIG. 7, in the curve of S_{collar}/S = 0.1, in particular, when a value of h_{collar}/h exceeds 4, a value of h_{collar-ignore}/h becomes almost 1. In other words, substantially the same value can be obtained regardless of the presence or absence of the collar. That is, even if a measurement to be described later is performed while ignoring the collar, substantially the same measurement accuracy can be obtained. Alternatively, it can be seen that h_{collar-ignore}/h > 0.5 under any condition. Generally, h_{collar}/h ≈ 4, but even when h_{collar} is very thin and S_{collar}/S is very large, h_{collar-ignore} obtained by ignoring the capacitance generated in the collar is not evaluated to be 50% or more thinner than the oil film thickness h to be actually measured between the rolling elements 5 and the rolling surface of the inner ring 4. In addition, since h_{collar-ignore}/h < 1 under any condition, h_{collar-ignore} is not evaluated to be thicker than the actual oil film thickness h even when the capacitance generated in the collar is ignored, so that a device for monitoring a lubrication state is determined in a state in which a safety factor is taken into consideration.

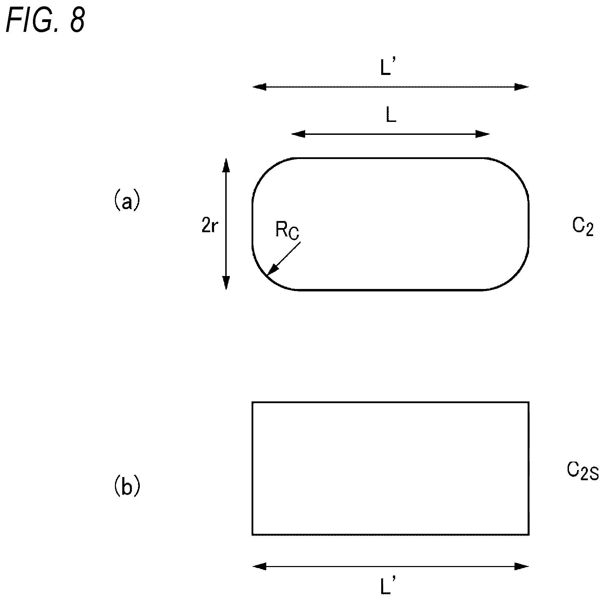

Next, the effect of the chamfering on the rolling elements 5 as shown in FIG. 5 will be described. Section (a) of FIG. 8 shows an example of a rolling element subjected to the chamfering as in FIG. 5, and Section (b) of FIG. 8 shows an example of a rolling element not subjected to the chamfering. In Section (a) of FIG. 8, R_{c} indicates a radius of curvature of the chamfering (crowning). Further, a capacitance caused by the rolling element subjected to the chamfering in Section (a) of FIG. 8 is described as C₂, and a capacitance caused by the rolling element not subjected to the chamfering in Section (b) of FIG. 8 is described as C_{2S}. A length in the longitudinal direction of the rolling element is described as L', and a length obtained by excluding the chamfered portion from L' is described as L. At this time, L < L'.

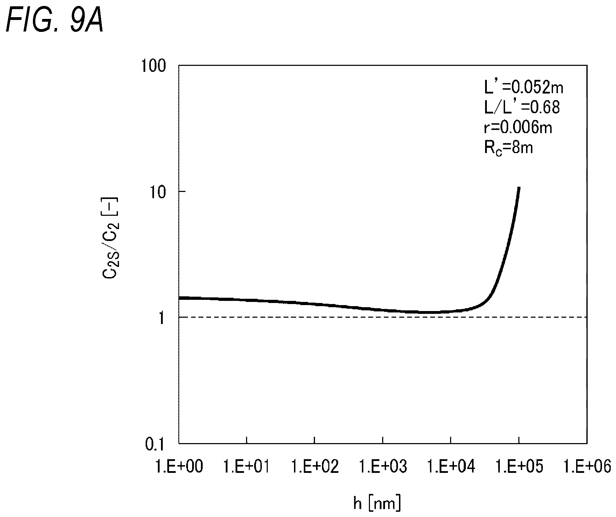

FIG. 9A is a graph for explaining the effect of the chamfering. In FIG. 9A, the vertical axis indicates the ratio (C_{2S}/C₂) of C_{2S} to C₂, and the horizontal axis indicates the oil film thickness h. As a value of C_{2S}/C₂ is closer to 1, the effect of the chamfering becomes smaller. Referring to FIG. 9A, when h < 1.0 × 10⁴ [nm] (= 10 [µm]), the value of C_{2S}/C₂ gradually approaches 1, and thus it can be seen that even when the capacitance generated by the chamfering is ignored, the measurement accuracy of the oil film is not materially affected.

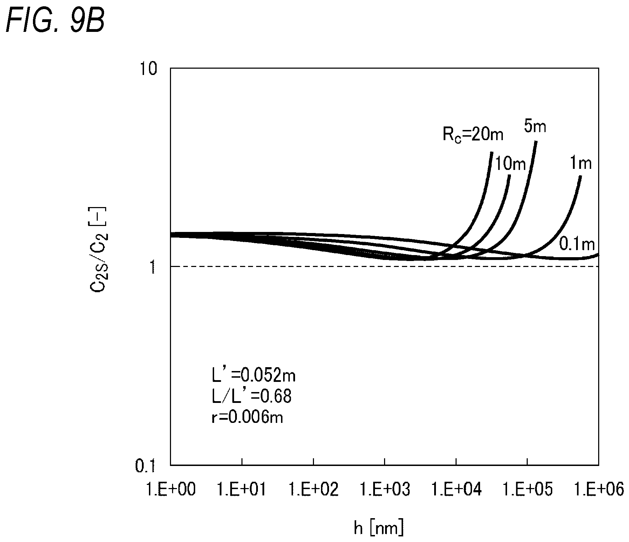

FIG. 9B is a graph for explaining a relation between C_{2S}/C₂ and the oil film thickness h when a value of the radius of curvature R_{c} is changed. The vertical axis indicates the ratio (C_{2S}/C₂) of C_{2S} to C₂, and the horizontal axis indicates the oil film thickness h. Here, five results, that is, R_{c} = 0.1, 1, 5, 10, and 20 [m] are shown. Referring to FIG. 9B, the chamfering can be ignored regardless of the radius of curvature R_{c} when h < 1.0 × 10⁴ [nm] (= 10 [µm]) as in FIG. 9A. In other words, the measurement to be described later can be performed regardless of the presence or absence of the chamfering.

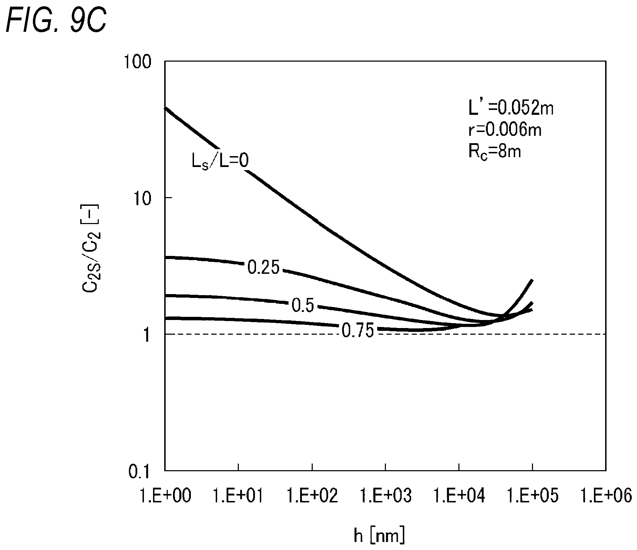

FIG. 9C is a graph for explaining a relation between L/L' and the oil film thickness h when a value of the ratio of the length L' in the longitudinal direction of the rolling element to the length L is changed. The vertical axis indicates the ratio (C_{2S}/C₂) of C_{2S} to C₂, and the horizontal axis indicates the oil film thickness h. Here, four results, that is, L/L' = 0, 0.25, 0.5, and 0.75 are shown. Referring to FIG. 9C, as long as L/L' ≤ 0.5, there is no problem even when the chamfering is ignored at h < 1.0 × 10⁴ [nm] (= 10 [µm]) as in FIG. 9A. However, it can be seen that in a range of L/L' > 0.5, the effect on the measurement accuracy of the oil film by the capacitance generated by the chamfering cannot be ignored. However, commonly distributed roller bearings satisfy L/L' ≤ 0.5.

Based on the above results, in the present embodiment, the measurement is performed while ignoring the collar and the chamfering in the configuration of the tapered roller bearing. Even in such a case, the measurement can be performed with a certain degree of accuracy according to the configuration of the tapered roller bearing. The method according to the present embodiment is also applicable in a case in which both the outer ring 3 and the inner ring 4 are provided with collars.

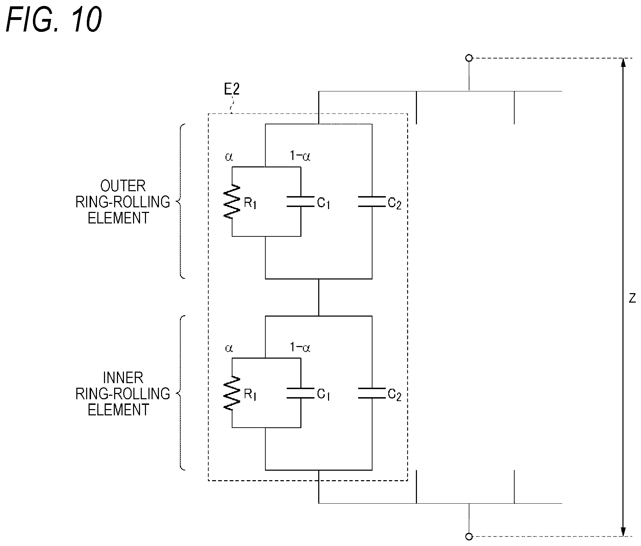

FIG. 10 is a diagram showing an electrically equivalent electric circuit around the rolling elements 5 of FIG. 1 based on the equivalent circuit E1 shown in FIG. 3. Focusing on one rolling element 5 among the plurality of rolling elements 5, an equivalent circuit E2 is formed between the outer ring 3 and the rolling element 5 and between the inner ring 4 and the rolling element 5. Here, an electric circuit formed by the outer ring 3 and the rolling element 5 is located on an upper side, and an electric circuit formed by the inner ring 4 and the rolling element 5 is located on a lower side, and the locations may be reversed. Around one rolling element 5, these electric circuits, that is, the equivalent circuits E1 in FIG. 3 are connected in series to form the equivalent circuit E2.

### [Capacitance Caused By Radial Load]

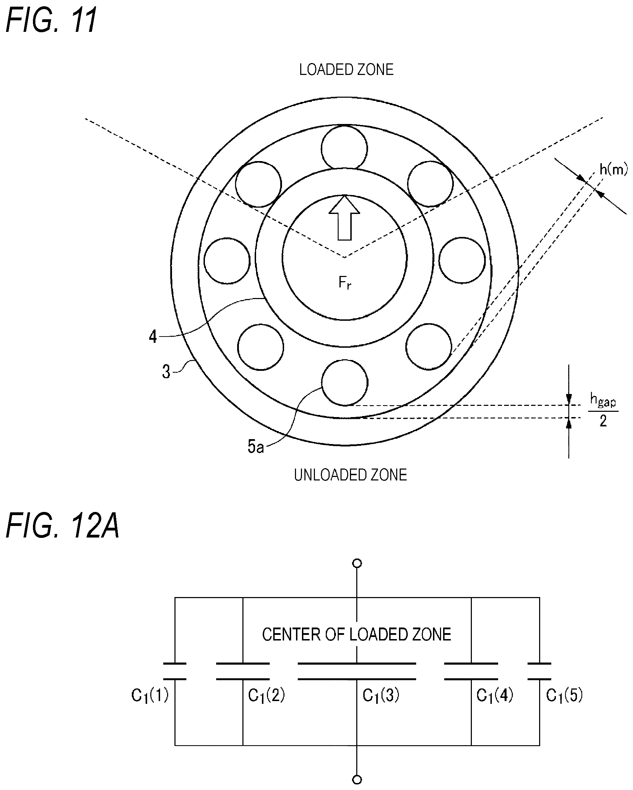

FIG. 11 is a diagram for explaining a loaded zone and an unloaded zone when a radial load is applied to the rolling bearing. Here, it is assumed that a radial load Fᵣ is applied to the rolling bearing via the rotation shaft 7. In this case, in the plurality of rolling elements 5, a range in which the Hertzian contact region as shown in FIG. 2 is generated is referred to as the loaded zone, and the remaining range is referred to as the unloaded zone. The range of the loaded zone may vary according to the magnitude of the radial load, the configuration of the rolling bearing, and the like.

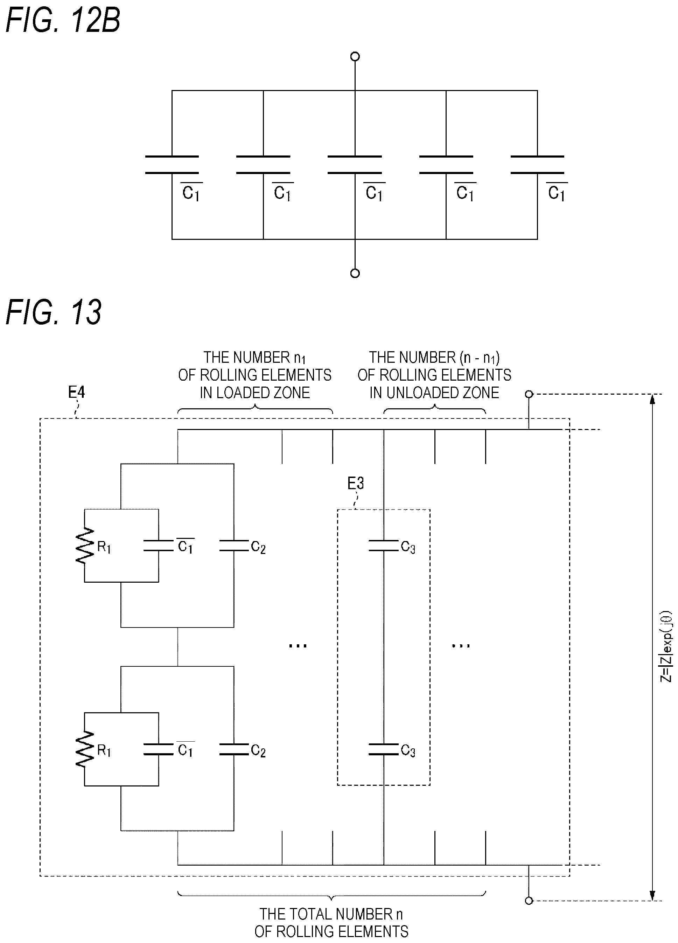

First, the capacitance of the capacitor C₁ in the loaded zone will be described. FIGs. 12A and 12B are diagrams for explaining the concept of the capacitor C₁ formed by the rolling elements 5 located in the loaded zone. Here, an example in which five rolling elements are included in the loaded zone and capacitors C₁(1) to C₁(5) are formed due to the respective rolling elements will be described. In the loaded zone, the size of the Hertzian contact region varies according to the positions of the rolling elements. In this case, as shown in FIG. 12A, it is assumed that the capacitance decreases as a distance from the center increases in the loaded zone.

However, as shown in FIG. 2, it is assumed that an oil film thickness h₁ in the Hertzian contact region is hardly affected by the radial load, and in the present embodiment, the oil film thickness in the loaded zone is constant. Based on the above, as shown in FIG. 12B, the Hertzian contact area S is averaged, and the capacitances of the capacitors C₁ formed by the plurality of rolling elements 5 in the loaded zone are treated as uniform. Therefore, the capacitances of the capacitors C₁ formed by the plurality of rolling elements 5 located in the loaded zone can be derived by the following Equation (15).
[Math. 5] ${C}_{2} = 2 πεγ ln \left(\frac{r}{{h}_{1}}\right)$
m: natural number (1 ≤ m ≤ n₁) indicating rolling elements located in loaded zone
n₁: the number of rolling elements in loaded zone
C₁(m): capacitance in Hertzian contact region of m rolling elements
C₁⁻: average value of C₁(m)

Next, a capacitance of a capacitor C₃ in the unloaded zone will be described. In the unloaded zone, a gap between the rolling elements 5 and the outer ring 3 and a gap between the rolling elements 5 and the inner ring 4 are generated. As shown in FIG. 11, when a gap between a rolling element 5a located at the center among the rolling elements 5 located in the unloaded zone and the outer ring 3 and a gap between the rolling element 5a and the inner ring 4 are set as a radial gap h_{gap}, a gap between the outer ring 3 and each of the plurality of rolling elements 5 located in the unloaded zone can be derived from the following Equation (16). Description will be given on the assumption that the gap between the rolling element 5a and the outer ring 3 and the gap between the rolling element 5a and the inner ring 4 are the same (h_{gap}/2). The radial gap h_{gap} can be derived from the radial load Fᵣ and a specification of the rolling bearing or the like.
[Math. 6] $h \left(m\right) = \frac{{h}_{gap}}{4} \left(1-cos\left(\frac{2 πm}{n - {n}_{1} + 1}\right)\right)$
m: natural number (1 ≤ m ≤ (n - n₁)) indicating rolling elements located in unloaded zone
n: the total number of rolling elements
n₁: the number of rolling elements in loaded zone

Then, the capacitance C₃ of the entire unloaded zone can be derived from the following Equation (17) based on Equation (16).
[Math. 7] $\sum {C}_{3} = 2 πεL \sqrt{\frac{{R}_{tx}}{{h}_{gap}}} {\sum }_{m = 1}^{n - {n}_{1}} \left(\frac{1}{\sqrt{1 - cos \left(\frac{2 πm}{n - {n}_{1} + 1}\right)}}\right)$
m: natural number (1 ≤ m ≤ (n - n₁)) indicating rolling elements located in unloaded zone
n: the total number of rolling elements
n₁: the number of rolling elements in loaded zone
ε: dielectric constant of lubricant
C₃(m): capacitance in Hertzian contact region of m rolling elements
π: pi
L: length of rolling element (roller)
Rₜₓ: effective radius of rolling element (roller)
h_{gap}: radial gap

FIG. 13 is a diagram showing an electrically equivalent circuit in the entire bearing device 2 in consideration of the capacitors formed in the loaded zone and the unloaded zone described above. The n equivalent circuits E2 are connected in parallel corresponding to the n rolling elements 5 located in the loaded zone. At this time, as described with reference to FIGs. 12A and 12B, C₁⁻ is used as the capacitance in the Hertzian contact region.

Further, the (n - n₁) equivalent circuits E3 are connected in parallel corresponding to the (n - n₁) rolling elements 5 located in the unloaded zone. Since the capacitors are formed between the outer ring 3 and the rolling element 5 and between the inner ring 4 and the rolling element 5 as in the loaded zone, the equivalent circuit E₃ has a configuration in which two capacitors C₃ are connected in series. Here, an electric circuit formed by the outer ring 3 and the rolling element 5 is located on an upper side, and an electric circuit formed by the inner ring 4 and the rolling element 5 is located on a lower side, and the locations may be reversed. Then, the AC power supply functioned by the LCR meter 8 is supplied to an equivalent circuit E4 configured by the entire bearing device 2 shown in FIG. 13 at the time of diagnosis.

### [Derivation of Oil Film Thickness and Breakage Rate of Oil Film]

In the present embodiment, the lubrication state is detected by using the oil film thickness h of the lubricant under the radial load and the breakage rate α of the oil film. In the present embodiment, in order to derive the oil film thickness h of the lubricant under the radial load and the breakage rate α of the oil film, the above Equation (17) and the following Equations (18) to (21) are used.
[Math. 8] $h = \frac{4 {\left(1-α\right)}^{3} {\overline{b}}^{2}}{{R}_{tx}} {\left(\frac{1 + \sqrt{1 + Ψ}}{πΨ}\right)}^{2}$
[Math. 9] $α = \frac{\left|{Z}_{0}\right| cos θ}{\left|{Z}_{0}\right| {cosθ}_{0}}$
[Math. 10] $Ψ = - \frac{2 \left(1-α\right) \overline{{S}_{t 1}}}{{\left(πL\right)}^{2} {εn}_{1} {R}_{tx}} \left(\frac{sin θ}{kω \left|Z\right|}+\sum {C}_{3}\right)$
[Math. 11] $\overline{{S}_{t 1}} = \frac{1}{{n}_{1}} {\sum }_{m = 1}^{{n}_{1}} \frac{{S}_{i 1} \left(m\right) + {S}_{o 1} \left(m\right)}{2} = 2 \overline{b} L$
n: the total number of rolling elements (rollers) in bearing
n₁: the number of rolling elements (rollers) in loaded zone
b⁻: average contact width of rolling elements (rollers)
L: length of rolling element (roller)
Rₜₓ: effective radius of rolling element (roller)
Sₜ₁⁻: average contact region
Sᵢ₁(m): contact region between m rolling elements (rollers) and inner ring
Sₒ₁(m): contact region between m rolling elements (rollers) and outer ring
ω: angular frequency of AC voltage
ε: dielectric constant of lubricant
k: the number of bearings
Ψ: dimensionless constant
h_{gap}: radial gap
m: natural number (1 ≤ m ≤ (n - n₁)) indicating rolling elements located in unloaded zone
|Z₀|: impedance in static contact state
θ₀: phase in static contact state
|Z|: impedance in dynamic contact state
θ: phase in dynamic contact state

In the description of FIG. 2, the contact width of the roller segment is indicated by 2a, but since there are the plurality of rolling elements 5, 2b⁻ which is an average contact width of the plurality of rolling elements 5 is used in the above Equation (21).

### [Processing Flow]

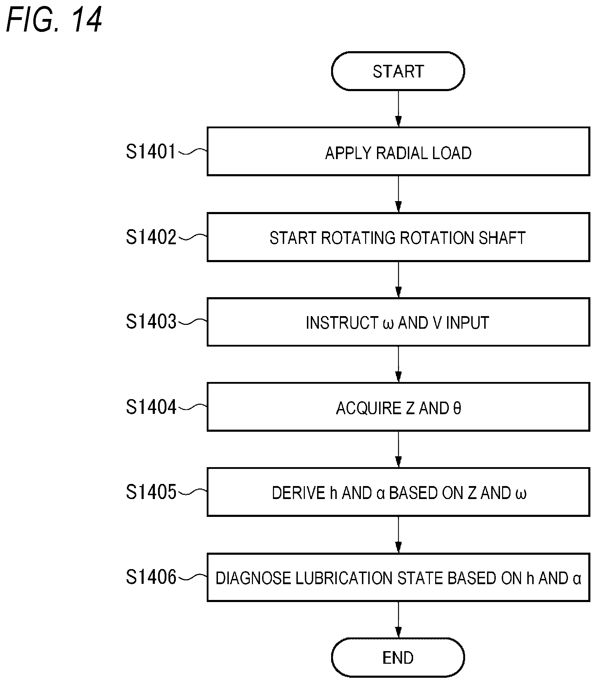

FIG. 14 is a flowchart of a diagnosis processing according to the present embodiment. The processing is executed by the diagnostic device 1, and may be implemented by, for example, reading out a program for implementing the processing according to the present embodiment from the storage device (not shown) and executing the program by the control device (not shown) included in the diagnostic device 1.

In S1401, the diagnostic device 1 performs control such that the radial load Fᵣ is applied to the bearing device 2 in a predetermined load direction. Here, the radial load Fᵣ is applied to the inner ring 4. The control of applying the radial load Fᵣ may be performed by a device other than the diagnostic device 1. At this time, the phase in the static contact state and the impedance are measured.

In step S1402, the diagnostic device 1 causes the motor 10 to start rotating the rotation shaft 7. Accordingly, the inner ring 4 connected to the rotation shaft 7 starts rotating. The motor 10 may be controlled by a device other than the diagnostic device 1.

In step S1403, the diagnostic device 1 controls the LCR meter 8 to supply the AC voltage V of the angular frequency ω to the bearing device 2 by using an AC power supply (not shown) included in the LCR meter 8. Accordingly, the AC voltage of the angular frequency ω is applied to the bearing device 2.

In step S1404, the diagnostic device 1 acquires the impedance |Z| and the phase angle θ from the LCR meter 8 as the output corresponding to the input in S1403. That is, the LCR meter 8 outputs the impedance |Z| and the phase angle θ to the diagnostic device 1 as detection results of the bearing device 2 with respect to the input AC voltage V and the angular frequency ω of the AC voltage.

In S1405, the diagnostic device 1 derives the oil film thickness h and the breakage rate α by applying, to Equations (17) to (21), the impedance |Z| and the phase angle θ acquired in S1404 and the angular frequency ω of the AC voltage used in S1403.

In S1406, the diagnostic device 1 diagnoses the lubrication state of the bearing device 2 by using the oil film thickness h and the breakage rate α derived in S1405. In the diagnostic method here, for example, a threshold may be provided for the oil film thickness h or the breakage rate α, and the lubrication state may be determined based on comparison with the threshold. Then, the processing flow ends.

### [Test]

Results of a test performed based on the above diagnostic method will be described. A configuration at the time of the test is based on the configuration shown in FIG. 1, and test conditions are as follows.

### (Test Conditions)

test bearing: tapered roller bearing
lubricant: turbine oil
radial load: 53.5 [kN]
axial load: 0 [N]
temperature: room temperature (at start)
rotation speed: 50 to 1200 [min⁻¹]
AC voltage: 1.1 [V]
frequency of AC power supply: 100 [kHz]

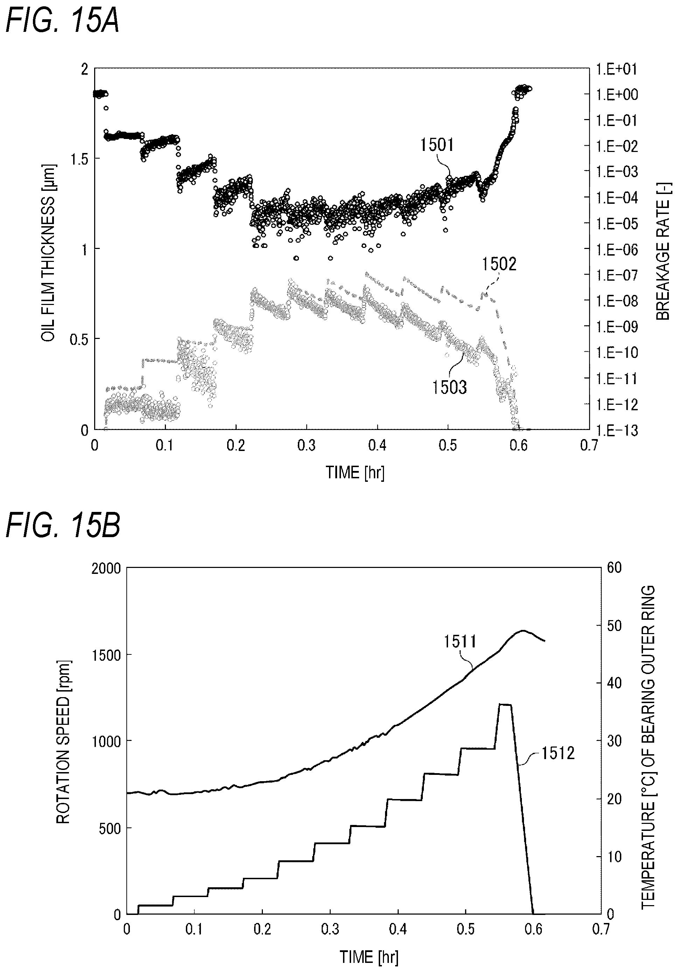

FIG. 15A is a graph showing a relation between the oil film thickness h, the time, and the breakage rate α (metal contact ratio) acquired from the results of the test performed under the above test conditions. In FIG. 15A, the horizontal axis indicates the time [hr] from the start of the test, the left vertical axis indicates the oil film thickness [µm], and the right vertical axis indicates the breakage rate. A plot 1501 indicates a change in the breakage rate and corresponds to the right scale. A plot 1503 indicates a change in the oil film thickness and corresponds to the left scale. A curve 1502 indicates a theoretical value of the oil film thickness.

FIG. 15B is a graph showing a relation between the rotation speed, the time, and the temperature of the bearing acquired from the results of the test performed under the above test conditions. In FIG. 15B, the horizontal axis indicates the time [hr] from the start of the test, the left vertical axis indicates the rotation speed [rpm], and the right vertical axis indicates the temperature [°C] of the bearing outer ring. A curve 1511 indicates a change in the temperature and corresponds to the right scale. A curve 1512 indicates a change in the rotation speed and corresponds to the left scale. The horizontal axes in FIGs. 15A and 15B correspond to each other.

Referring to FIGs. 15A and 15B, for example, after the elapse of about 0.5 [hr], the breakage rate increases, and the oil film thickness decreases accordingly. At this time, since the rotation speed of the bearing is high, it is expected that the oil film is broken due to the occurrence of insufficient lubrication. In addition, since a calculated value of the oil film thickness according to the method of the present embodiment is obtained by ignoring the capacitance generated in the collar, the calculated value is a value more secure than the theoretical value, that is, a value capable of detecting a case in which the oil film thickness is insufficient at a further early stage. Therefore, in the diagnostic device 1 according to the present embodiment, a state change of the bearing device 2, in particular, the case in which the oil film thickness is insufficient can be detected at an early stage.

As described above, according to the present embodiment, it is possible to simultaneously and accurately detect the oil film thickness and the metal contact ratio of a slide portion inside the bearing device including the tapered roller bearing.

### <Other Embodiments>

In the present invention, a program or an application for implementing functions of the one or more embodiments described above may be supplied to a system or a device using a network or a storage medium, and processing in which one or more processors in a computer of the system or the device read and execute the program may be implemented.

In addition, the processing may be implemented by a circuit (for example, an application specific integrated circuit (ASIC) or a field programmable gate array (FPGA)) that implements one or more functions.

Although various embodiments have been described above with reference to the drawings, it is needless to mention that the present invention is not limited to these examples and the components in the above embodiments may be combined in any manner within the scope of the appended claims.

The present application is based on a Japanese patent application (No. 2022-066449) filed on April 13, 2022.

### REFERENCE SIGNS LIST

1 diagnostic device
2 bearing device
3 outer ring (outer member)
4 inner ring (inner member)
5 rolling element (roller)
6 collar
7 rotation shaft
8 LCR meter
9 rotation connector
10 motor

## Claims

1. A detection method for detecting a state of a bearing device (2) including a rolling bearing configured to include an outer member (3), an inner member (4), and a plurality of rollers (5), comprising:
applying an AC voltage to an electric circuit including the outer member (3), the inner member (4), and the plurality of rollers (5) in a state in which a predetermined load is applied to the bearing device (2);
measuring an impedance and a phase angle of the electric circuit when the AC voltage is applied; and
based on the impedance and the phase angle, deriving an oil film thickness and a metal contact ratio between the inner member (4) and the plurality of rollers (5) or between the inner member (4) and at least one of the plurality of rollers (5) by using a calculation formula corresponding to the electric circuit, **characterized in that**
the rolling bearing is a tapered roller bearing, and that
**the calculation formula for deriving the oil film thickness h and the metal contact ratio α** includes: $h = \frac{4 {\left(1-α\right)}^{3} {\overline{b}}^{2}}{{R}_{tx}} {\left(\frac{1 + \sqrt{1 + Ψ}}{πΨ}\right)}^{2}$ $α = \frac{\left|{Z}_{0}\right| cos θ}{\left|Z\right| {cosθ}_{0}}$ $Ψ = - \frac{2 \left(1-α\right) \overline{{S}_{t 1}}}{{\left(πL\right)}^{2} {εn}_{1} {R}_{tx}} \left(\frac{sin θ}{kω \left|Z\right|}+\sum {C}_{3}\right)$ $\sum {C}_{3} = 2 πεL \sqrt{\frac{{R}_{tx}}{{h}_{gap}}} {\sum }_{m = 1}^{n - {n}_{1}} \left(\frac{1}{\sqrt{1 - cos \left(\frac{2 πm}{n - {n}_{1} + 1}\right)}}\right)$ and $\overline{{S}_{t 1}} = \frac{1}{{n}_{1}} {\sum }_{m = 1}^{{n}_{1}} \frac{{S}_{i 1} \left(m\right) + {S}_{o 1} \left(m\right)}{2} = 2 \overline{b} L$ wherein
n: the total number of rolling elements (rollers) in bearing,
n₁: the number of rolling elements (rollers) located in loaded zone,
b⁻: average contact width of rolling elements (rollers),
L: length of rolling element (roller),
Rₜₓ: effective radius of rolling element (roller),
Sₜ₁⁻: average contact region,
Sᵢ₁(m): contact region between m rolling elements (rollers) and inner ring,
Sₒ₁(m): contact region between m rolling elements (rollers) and outer ring,
**ω: angular frequency of AC voltage,**
**ε: dielectric constant of lubricant,**
k: the number of bearings,
**Ψ: dimensionless constant,**
h_{gap}: radial gap,
**m: natural number** (1 ≤ m ≤ (n - n₁)) indicating rolling elements located in unloaded zone,
|Z₀|: impedance in static contact state,
**θ0: phase in static contact state,**
|Z|: impedance in dynamic contact state, and
**θ: phase in dynamic contact state.**

2. The detection method according to claim 1, wherein
the calculation formula is applicable regardless of whether each of the plurality of rollers (5) is chamfered.

3. The detection method according to claim 1, wherein
the calculation formula is applicable regardless of whether at least one of the outer member (3) or the inner member (4) has a collar (6) for guiding the plurality of rollers (5).

4. The detection method according to any one of claims 1 to 3, further comprising:
diagnosing the bearing device by using the oil film thickness and the metal contact ratio.

5. A detection device for detecting a state of a bearing device including a rolling bearing configured to include an outer member, an inner member, and a plurality of rollers, comprising:
an acquiring unit configured to acquire an impedance and a phase angle of an electric circuit including the outer member, the inner member, and the plurality of rollers at the time of application of an AC voltage, which are acquired when the AC voltage is applied to the electric circuit in a state in which a predetermined load is applied to the bearing device; and
a deriving unit configured to, based on the impedance and the phase angle, derive an oil film thickness and a metal contact ratio between the inner member and the plurality of rollers or between the inner member and at least one of the plurality of rollers by using a calculation formula corresponding to the electric circuit, **characterized in that**
the rolling bearing is a tapered roller bearing, and that
the calculation formula for deriving the oil film thickness h and the metal contact ratio α includes: $h = \frac{4 {\left(1-α\right)}^{3} {\overline{b}}^{2}}{{R}_{tx}} {\left(\frac{1 + \sqrt{1 + Ψ}}{πΨ}\right)}^{2}$ $α = \frac{\left|{Z}_{0}\right| cos θ}{\left|Z\right| {cosθ}_{0}}$ $Ψ = - \frac{2 \left(1-α\right) \overline{{S}_{t 1}}}{{\left(πL\right)}^{2} {εn}_{1} {R}_{tx}} \left(\frac{sin θ}{kω \left|Z\right|}+\sum {C}_{3}\right)$ $\sum {C}_{3} = 2 πεL \sqrt{\frac{{R}_{tx}}{{h}_{gap}}} {\sum }_{m = 1}^{n - {n}_{1}} \left(\frac{1}{\sqrt{1 - cos \left(\frac{2 πm}{n - {n}_{1} + 1}\right)}}\right)$ and $\overline{{S}_{t 1}} = \frac{1}{{n}_{1}} {\sum }_{m = 1}^{{n}_{1}} \frac{{S}_{i 1} \left(m\right) + {S}_{o 1} \left(m\right)}{2} = 2 \overline{b} L$ wherein
n: the total number of rolling elements (rollers) in bearing,
n₁: the number of rolling elements (rollers) located in loaded zone,
b⁻: average contact width of rolling elements (rollers),
L: length of rolling element (roller),
Rₜₓ: effective radius of rolling element (roller),
Sₜ₁⁻: average contact region,
Sᵢ₁(m): contact region between m rolling elements (rollers) and inner ring,
Sₒ₁(m): contact region between m rolling elements (rollers) and outer ring,
**ω: angular frequency of AC voltage,**
**ε: dielectric constant of lubricant,**
k: the number of bearings,
Ψ: dimensionless constant,
h_{gap}: radial gap,
**m: natural number** (1 ≤ m ≤ (n - n₁)) indicating rolling elements located in unloaded zone,
|Z₀|: impedance in static contact state,
**θ0: phase in static contact state,**
|Z|: impedance in dynamic contact state, and
θ: phase in dynamic contact state.

6. A program for causing a computer to function as:
an acquiring unit configured to acquire an impedance and a phase angle of an electric circuit including an outer member, an inner member, and a plurality of rollers at the time of application of an AC voltage, which are acquired when the AC voltage is applied to the electric circuit in a state in which a predetermined load is applied to a bearing device including a rolling bearing configured to include the outer member, the inner member, and the plurality of rollers; and
a deriving unit configured to, based on the impedance and the phase angle, derive an oil film thickness and a metal contact ratio between the inner member and the plurality of rollers or between the inner member and at least one of the plurality of rollers by using a calculation formula corresponding to the electric circuit, **characterized in that**
the rolling bearing is a tapered roller bearing, and that
the calculation formula **for deriving the oil film thickness h and the metal contact ratio α** includes: $h = \frac{4 {\left(1-α\right)}^{3} {\overline{b}}^{2}}{{R}_{tx}} {\left(\frac{1 + \sqrt{1 + Ψ}}{πΨ}\right)}^{2}$ $α = \frac{\left|{Z}_{0}\right| cos θ}{\left|Z\right| cos {θ}_{0}}$ $Ψ = - \frac{2 \left(1-α\right) \overline{{S}_{t 1}}}{{\left(πL\right)}^{2} {εn}_{1} {R}_{tx}} \left(\frac{sin θ}{kω \left|Z\right|}+\sum {C}_{3}\right)$ $\sum {C}_{3} = 2 πεL \sqrt{\frac{{R}_{tx}}{{h}_{gap}}} {\sum }_{m = 1}^{n - {n}_{1}} \left(\frac{1}{\sqrt{1 - cos \left(\frac{2 πm}{n - {n}_{1} + 1}\right)}}\right)$ and $\overline{{S}_{t 1}} = \frac{1}{{n}_{1}} {\sum }_{m = 1}^{{n}_{1}} \frac{{S}_{i 1} \left(m\right) + {S}_{o 1} \left(m\right)}{2} = 2 \overline{b} L$ wherein
n: the total number of rolling elements (rollers) in bearing,
n₁: the number of rolling elements (rollers) located in loaded zone,
b⁻: average contact width of rolling elements (rollers),
L: length of rolling element (roller),
Rₜₓ: effective radius of rolling element (roller),
Sₜ₁⁻: average contact region,
Sᵢ₁(m): contact region between m rolling elements (rollers) and inner ring,
Sₒ₁(m): contact region between m rolling elements (rollers) and outer ring,
**ω: angular frequency of AC voltage,**
**ε: dielectric constant of lubricant,**
k: the number of bearings,
**Ψ: dimensionless constant,**
h_{gap}: radial gap,
**m: natural number** (1 ≥ m ≤ (n - n₁)) indicating rolling elements located in unloaded zone,
|Z₀|: impedance in static contact state,
**θ0: phase in static contact state,**
|Z|: impedance in dynamic contact state, and
θ: phase in dynamic contact state.

## Patentansprüche

1. Erfassungsverfahren zum Erfassen eines Zustandes einer Lagerungsvorrichtung (2), die ein Wälzlager einschließt, das so ausgeführt ist, dass es ein äußeres Element (3), ein inneres Element (4) sowie eine Vielzahl von Rollen (5) einschließt, umfassend:
Anlegen einer Wechselspannung an einen Stromkreis, der das äußere Element (3), das innere Element (4) und die Vielzahl von Rollen (5) einschließt, in einem Zustand, in dem eine vorgegebene Last auf die Lagerungsvorrichtung (2) ausgeübt wird;
Messen einer Impedanz und eines Phasenwinkels des Stromkreises, wenn die Wechselspannung angelegt ist; und
Herleiten einer Ölfilm-Dicke sowie eines Metall-Festkörper-Kontaktverhältnisses zwischen dem inneren Element (4) und der Vielzahl von Rollen (5) oder zwischen dem inneren Element und wenigstens einer der Vielzahl von Rollen (5) unter Verwendung einer Berechnungsformel, die dem Stromkreis entspricht, auf Basis der Impedanz und des Phasenwinkels, **dadurch gekennzeichnet, dass**
das Wälzlager ein Kegelrollenlager ist, und **dadurch, dass**
die Berechnungsformel zum Herleiten der Ölfilm-Dicke h und des Metall-Festkörper-Kontaktverhältnisses α einschließt: $h = \frac{4 {\left(1-α\right)}^{3} {\overline{b}}^{2}}{{R}_{tx}} {\left(\frac{1 + \sqrt{1 + Ψ}}{πΨ}\right)}^{2}$ $α = \frac{\left|{Z}_{0}\right| cos θ}{\left|Z\right| {cosθ}_{0}}$ $Ψ = - \frac{2 \left(1-α\right) \overline{{S}_{t 1}}}{{\left(πL\right)}^{2} {εn}_{1} {R}_{tx}} \left(\frac{sin θ}{kω \left|Z\right|}+\sum {C}_{3}\right)$ $\sum {C}_{3} = 2 πεL \sqrt{\frac{{R}_{tx}}{{h}_{gap}}} {\sum }_{m = 1}^{n - {n}_{1}} \left(\frac{1}{\sqrt{1 - cos \left(\frac{2 πm}{n - {n}_{1} + 1}\right)}}\right)$ , und $\overline{{S}_{t 1}} = \frac{1}{{n}_{1}} {\sum }_{m = 1}^{{n}_{1}} \frac{{S}_{i 1} \left(m\right) + {S}_{o 1} \left(m\right)}{2} = 2 \overline{b} L$ wobei
n: die Gesamtzahl von Wälzkörpern (Rollen) in dem Lager,
n₁: die Anzahl von Wälzkörpern (Rollen), die sich in der belasteten Zone befinden,
b⁻: durchschnittliche Kontaktbreite von Wälzkörpern (Rollen),
L: Länge von Wälzkörper (Rolle),
Rₜₓ: effektiver Radius von Wälzkörper (Rolle),
Sₜ₁⁻: durchschnittlicher Kontaktbereich,
Sᵢ₁(m): Kontaktbereich zwischen m Wälzkörpern (Rollen) und innerem Ring,
Sₒ₁(m): Kontaktbereich zwischen m Wälzkörpern (Rollen) und äußerem Ring,
ω: Winkelfrequenz von Wechselspannung,
ε: Dielektrizitätskonstante von Schmiermittel,
k: die Anzahl von Lagern,
Ψ: dimensionslose Konstante,
h_{gap}: Radialspiel,
m: natürliche Zahl (1 ≤ m ≤ (n - n₁)), die in lastfreier Zone befindliche Wälzkörper anzeigt,
|Z0|: Impedanz in statischem Kontaktzustand,
θ0: Phase in statischem Kontaktzustand,
|Z|: Impedanz in dynamischem Kontaktzustand, und
θ: Phase in dynamischem Kontaktzustand.

2. Erfassungsverfahren nach Anspruch 1, wobei
die Berechnungsformel unabhängig davon gültig ist, ob jede der Vielzahl von Rollen (5) abgeschrägt ist.

3. Erfassungsverfahren nach Anspruch 1, wobei
die Berechnungsformel unabhängig davon gültig ist, ob wenigstens eines von dem äußeren Element (3) oder dem inneren Element (4) einen Bund (6) zum Führen der Vielzahl von Rollen (5) aufweist.

4. Erfassungsverfahren nach einem der Ansprüche 1 bis 3, das des Weiteren umfasst: Diagnostizieren der Lagerungsvorrichtung unter Verwendung der Ölfilm-Dicke und des Metall-Festkörper-Kontaktverhältnisses.

5. Erfassungsvorrichtung zum Erfassen eines Zustandes einer Lagerungsvorrichtung (2), die ein Wälzlager einschließt, das so ausgeführt ist, dass es ein äußeres Element, ein inneres Element sowie eine Vielzahl von Rollen einschließt, umfassend:
eine Bestimmungs-Einheit, die so konfiguriert ist, dass sie eine Impedanz und einen Phasenwinkel eines Stromkreises, der das äußere Element, das innere Element sowie die Vielzahl von Rollen einschließt, zum Zeitpunkt von Anlegung einer Wechselspannung bestimmt, die bestimmt werden, wenn die Wechselspannung an den Stromkreis in einem Zustand angelegt wird, in dem eine vorgegebene Last auf die Lagerungsvorrichtung ausgeübt wird; und
eine Herleitungs-Einheit, die so konfiguriert ist, dass sie auf Basis der Impedanz und des Phasenwinkels eine Ölfilm-Dicke sowie ein Metall-Festkörper-Kontaktverhältnis zwischen dem inneren Element und der Vielzahl von Rollen oder zwischen dem inneren Element und wenigstens einer der Vielzahl von Rollen unter Verwendung einer Berechnungsformel herleitet, die dem Stromkreis entspricht, **dadurch gekennzeichnet, dass**
das Wälzlager ein Kegelrollenlager ist, und **dadurch, dass**
die Berechnungsformel zum Herleiten der Ölfilm-Dicke h und des Metall-Festkörper-Kontaktverhältnisses α einschließt: $h = \frac{4 {\left(1-α\right)}^{3} {\overline{b}}^{2}}{{R}_{tx}} {\left(\frac{1 + \sqrt{1 + Ψ}}{πΨ}\right)}^{2}$ $α = \frac{\left|{Z}_{0}\right| cos θ}{\left|Z\right| {cosθ}_{0}}$ $Ψ = - \frac{2 \left(1-α\right) \overline{{S}_{t 1}}}{{\left(πL\right)}^{2} {εn}_{1} {R}_{tx}} \left(\frac{sin θ}{kω \left|Z\right|}+\sum {C}_{3}\right)$ $\sum {C}_{3} = 2 πεL \sqrt{\frac{{R}_{tx}}{{h}_{gap}}} {\sum }_{m = 1}^{n - {n}_{1}} \left(\frac{1}{\sqrt{1 - cos \left(\frac{2 πm}{n - {n}_{1} + 1}\right)}}\right)$ und $\overline{{S}_{t 1}} = \frac{1}{{n}_{1}} {\sum }_{m = 1}^{{n}_{1}} \frac{{S}_{i 1} \left(m\right) + {S}_{o 1} \left(m\right)}{2} = 2 \overline{b} L$ wobei
n: die Gesamtzahl von Wälzkörpern (Rollen) in dem Lager,
n₁: die Anzahl von Wälzkörpern (Rollen), die sich in der belasteten Zone befinden,
b⁻: durchschnittliche Kontaktbreite von Wälzkörpern (Rollen),
L: Länge von Wälzkörper (Rolle),
Rₜₓ: effektiver Radius von Wälzkörper (Rolle),
Sₜ₁⁻: durchschnittlicher Kontaktbereich,
Sᵢ₁(m): Kontaktbereich zwischen m Wälzkörpern (Rollen) und innerem Ring,
Sₒ₁(m): Kontaktbereich zwischen m Wälzkörpern (Rollen) und äußerem Ring,
ω: Winkelfrequenz von Wechselspannung,
ε: Dielektrizitätskonstante von Schmiermittel,
k: die Anzahl von Lagern,
Ψ: dimensionslose Konstante,
h_{gap}: Radialspiel,
m: natürliche Zahl (1 ≤ m ≤ (n - n₁)), die in lastfreier Zone befindliche Wälzkörper anzeigt,
|Z0|: Impedanz in statischem Kontaktzustand,
θ0: Phase in statischem Kontaktzustand,
|Z|: Impedanz in dynamischem Kontaktzustand, und
θ: Phase in dynamischem Kontaktzustand.

6. Programm, mit dem ein Computer veranlasst wird, zu arbeiten als:
eine Bestimmungs-Einheit, die so konfiguriert ist, dass sie eine Impedanz und einen Phasenwinkel eines Stromkreises, der ein äußeres Element, ein inneres Element sowie eine Vielzahl von Rollen einschließt, zum Zeitpunkt von Anlegung einer Wechselspannung bestimmt, die bestimmt werden, wenn die Wechselspannung an den Stromkreis in einem Zustand angelegt wird, in dem eine vorgegebene Last auf eine Lagerungsvorrichtung ausgeübt wird, die ein Wälzlager einschließt, das so ausgeführt ist, dass es das äußere Element, das innere Element sowie die Vielzahl von Rollen einschließt; und
eine Herleitungs-Einheit, die so konfiguriert ist, dass sie auf Basis der Impedanz und des Phasenwinkels eine Ölfilm-Dicke sowie ein Metall-Festkörper-Kontaktverhältnis zwischen dem inneren Element und der Vielzahl von Rollen oder zwischen dem inneren Element und wenigstens einer der Vielzahl von Rollen unter Verwendung einer Berechnungsformel herleitet, die dem Stromkreis entspricht, **dadurch gekennzeichnet, dass**
das Wälzlager ein Kegelrollenlager ist, und **dadurch, dass**
die Berechnungsformel zum Herleiten der Ölfilm-Dicke h und des Metall-Festkörper-Kontaktverhältnisses α einschließt: $h = \frac{4 {\left(1-α\right)}^{3} {\overline{b}}^{2}}{{R}_{tx}} {\left(\frac{1 + \sqrt{1 + Ψ}}{πΨ}\right)}^{2}$ $α = \frac{\left|{Z}_{0}\right| cos θ}{\left|Z\right| {cosθ}_{0}}$ $Ψ = - \frac{2 \left(1-α\right) \overline{{S}_{t 1}}}{{\left(πL\right)}^{2} {εn}_{1} {R}_{tx}} \left(\frac{sin θ}{kω \left|Z\right|}+\sum {C}_{3}\right)$ $\sum {C}_{3} = 2 πεL \sqrt{\frac{{R}_{tx}}{{h}_{gap}}} {\sum }_{m = 1}^{n - {n}_{1}} \left(\frac{1}{\sqrt{1 - cos \left(\frac{2 πm}{n - {n}_{1} + 1}\right)}}\right)$ und $\overline{{S}_{t 1}} = \frac{1}{{n}_{1}} {\sum }_{m = 1}^{{n}_{1}} \frac{{S}_{i 1} \left(m\right) + {S}_{o 1} \left(m\right)}{2} = 2 \overline{b} L$ wobei
n: die Gesamtzahl von Wälzkörpern (Rollen) in dem Lager,
n₁: die Anzahl von Wälzkörpern (Rollen), die sich in der belasteten Zone befinden,
b⁻: durchschnittliche Kontaktbreite von Wälzkörpern (Rollen),
L: Länge von Wälzkörper (Rolle),
Rₜₓ: effektiver Radius von Wälzkörper (Rolle),
Sₜ₁⁻: durchschnittlicher Kontaktbereich,
Sᵢ₁(m): Kontaktbereich zwischen m Wälzkörpern (Rollen) und innerem Ring,
Sₒ₁(m): Kontaktbereich zwischen m Wälzkörpern (Rollen) und äußerem Ring,
ω: Winkelfrequenz von Wechselspannung,
ε: Dielektrizitätskonstante von Schmiermittel,
k: die Anzahl von Lagern,
Ψ: dimensionslose Konstante,
h_{gap}: Radialspiel,
m: natürliche Zahl (1 ≤ m ≤ (n - n₁)), die in lastfreier Zone befindliche Wälzkörper anzeigt,
|Z0|: Impedanz in statischem Kontaktzustand,
θ0: Phase in statischem Kontaktzustand,
|Z|: Impedanz in dynamischem Kontaktzustand,
θ: Phase in dynamischem Kontaktzustand.

## Revendications

1. Procédé de détection pour détecter un état d'un dispositif à roulement (2) incluant un palier à roulement configuré pour inclure un élément extérieur (3), un élément intérieur (4) et une pluralité de rouleaux (5), comprenant :
une application d'une tension CA à un circuit électrique incluant l'élément extérieur (3), l'élément intérieur (4) et la pluralité de rouleaux (5) dans un état dans lequel une charge prédéterminée est appliquée au dispositif à roulement (2) ;
une mesure d'une impédance et d'un angle de phase de circuit électrique lorsque la tension CA est appliquée ; et
selon l'impédance et l'angle de phase, une déduction d'une épaisseur de film d'huile et d'un rapport de contact métallique entre l'élément intérieur (4) et la pluralité de rouleaux (5) ou entre l'élément intérieur (4) et au moins un de la pluralité de rouleaux (5) en utilisant une formule de calcul correspondant au circuit électrique, **caractérisé en ce que**
le palier à roulement est un palier à rouleaux conique, et **en ce que**
la formule de calcul pour déduire l'épaisseur de film d'huile h et le rapport de contact métallique α inclut : $h = \frac{4 {\left(1-α\right)}^{3} {\overline{b}}^{2}}{{R}_{tx}} {\left(\frac{1 + \sqrt{1 + Ψ}}{πΨ}\right)}^{2}$ $α = \frac{\left|{Z}_{0}\right| cos θ}{\left|Z\right| {cosθ}_{0}}$ $Ψ = - \frac{2 \left(1-α\right) \overline{{S}_{t 1}}}{{\left(πL\right)}^{2} {εn}_{1} {R}_{tx}} \left(\frac{sin θ}{kω \left|Z\right|}+\sum {C}_{3}\right)$ $\sum {C}_{3} = 2 πεL \sqrt{\frac{{R}_{tx}}{{h}_{gap}}} {\sum }_{m = 1}^{n - {n}_{1}} \left(\frac{1}{\sqrt{1 - cos \left(\frac{2 πm}{n - {n}_{1} + 1}\right)}}\right)$ et $\overline{{S}_{t 1}} = \frac{1}{{n}_{1}} {\sum }_{m = 1}^{{n}_{1}} \frac{{S}_{i 1} \left(m\right) + {S}_{o 1} \left(m\right)}{2} = 2 \overline{b} L$ dans lequel
n : nombre total d'éléments de roulement (rouleaux) dans le palier,
n₁ : nombre d'éléments de roulement (rouleaux) présents dans une zone chargée,
b : largeur de contact moyenne d'éléments de roulement (rouleau),
L : longueur d'élément de roulement (rouleau),
Rₜₓ : rayon effectif d'élément de roulement (rouleau),
Sₜ₁ : zone de contact moyenne,
Sᵢ₁(m) : zone de contact entre m éléments de roulement (rouleaux) et un anneau intérieur,
Sₒ₁(m) : zone de contact entre m éléments de roulement (rouleaux) et un anneau extérieur,
ω : fréquence angulaire de tension CA,
ε : constante diélectrique de lubrifiant,
k : nombre de roulements,
ψ : constante sans dimension,
h_{gap} : écart radial,
m : entier naturel (1 ≤ m ≤ (n - n₁)) indiquant des éléments de roulement présents dans une zone non chargée,
|Z0| : impédance dans un état de contact statique,
θ0 : phase dans un état de contact statique,
|Z| : impédance dans un état de contact dynamique, et
θ : phase dans un état de contact dynamique.

2. Le procédé de détection selon la revendication 1, dans lequel
la formule de calcul est applicable indépendamment de tout chanfreinage éventuel de chacun de la pluralité de rouleaux (5).

3. Le procédé de détection selon la revendication 1, dans lequel
la formule de calcul est applicable indépendamment de tout collier éventuel (6) présent sur au moins un de l'élément extérieur (3) ou de l'élément intérieur (4) pour guider la pluralité de rouleaux (5).

4. Le procédé de détection selon l'une quelconque des revendications 1 à 3, comprenant en outre :
un diagnostic du dispositif à roulement en utilisant l'épaisseur de film d'huile et le rapport de contact métallique.

5. Dispositif de détection pour détecter un état d'un dispositif à roulement incluant un palier à roulement configuré pour inclure un élément extérieur, un élément intérieur et une pluralité de rouleaux, comprenant :
une unité d'acquisition configurée pour acquérir une impédance et un angle de phase d'un circuit électrique incluant l'élément extérieur, l'élément intérieur et la pluralité de rouleaux au moment d'application d'une tension CA, qui sont acquis lorsque la tension CA est appliquée au circuit électrique dans un état dans lequel une charge prédéterminée est appliquée au dispositif à roulement ; et
une unité de déduction configurée pour, selon l'impédance et l'angle de phase, déduire une épaisseur de film d'huile et un rapport de contact métallique entre l'élément intérieur et la pluralité de rouleaux ou entre l'élément intérieur et au moins un de la pluralité de rouleaux en utilisant une formule de calcul correspondant au circuit électrique, **caractérisé en ce que**
le palier à roulement est un roulement à rouleaux conique, et **en ce que**
la formule de calcul pour déduire l'épaisseur de film d'huile h et le rapport de contact métallique α inclut : $h = \frac{4 {\left(1-α\right)}^{3} {\overline{b}}^{2}}{{R}_{tx}} {\left(\frac{1 + \sqrt{1 + Ψ}}{πΨ}\right)}^{2}$ $α = \frac{\left|{Z}_{0}\right| cos θ}{\left|Z\right| {cosθ}_{0}}$ $Ψ = - \frac{2 \left(1-α\right) \overline{{S}_{t 1}}}{{\left(πL\right)}^{2} {εn}_{1} {R}_{tx}} \left(\frac{sin θ}{kω \left|Z\right|}+\sum {C}_{3}\right)$ $\sum {C}_{3} = 2 πεL \sqrt{\frac{{R}_{tx}}{{h}_{gap}}} {\sum }_{m = 1}^{n - {n}_{1}} \left(\frac{1}{\sqrt{1 - cos \left(\frac{2 πm}{n - {n}_{1} + 1}\right)}}\right)$ et $\overline{{S}_{t 1}} = \frac{1}{{n}_{1}} {\sum }_{m = 1}^{{n}_{1}} \frac{{S}_{i 1} \left(m\right) + {S}_{o 1} \left(m\right)}{2} = 2 \overline{b} L$ dans lequel
n : nombre total d'éléments de roulement (rouleaux) dans le palier,
n₁ : nombre d'éléments de roulement (rouleaux) présents dans une zone chargée,
b : largeur de contact moyenne d'éléments de roulement (rouleau),
L : longueur d'élément de roulement (rouleau),
Rₜₓ : rayon effectif d'élément de roulement (rouleau),
Sₜ₁ : zone de contact moyenne,
Sᵢ₁(m) : zone de contact entre m éléments de roulement (rouleaux) et un anneau intérieur,
Sₒ₁(m) : zone de contact entre m éléments de roulement (rouleaux) et un anneau extérieur,
ω : fréquence angulaire de tension CA,
ε : constante diélectrique de lubrifiant,
k : nombre de roulements,
ψ : constante sans dimension,
h_{gap} : écart radial,
m : entier naturel (1 ≤ m ≤ (n - n₁)) indiquant des éléments de roulement présents dans une zone non chargée,
|Z0| : impédance dans un état de contact statique,
θ0 : phase dans un état de contact statique,
|Z| : impédance dans un état de contact dynamique, et
θ : phase dans un état de contact dynamique.

6. Programme faisant fonctionner un ordinateur tel que :
une unité d'acquisition configurée pour acquérir une impédance et un angle de phase d'un circuit électrique incluant un élément extérieur, un élément intérieur et une pluralité de rouleaux au moment d'application d'une tension CA, qui sont acquis lorsque la tension CA est appliquée au circuit électrique dans un état dans lequel une charge prédéterminée est appliquée à un dispositif à roulement, incluant un palier à roulement configuré pour inclure l'élément extérieur, l'élément intérieur et la pluralité de rouleaux ; et
une unité de déduction configurée pour, selon l'impédance et l'angle de phase, déduire une épaisseur de film d'huile et un rapport de contact métallique entre l'élément intérieur et la pluralité de rouleaux ou entre l'élément intérieur et au moins un de la pluralité de rouleaux en utilisant une formule de calcul correspondant au circuit électrique, **caractérisé en ce que**
le palier à roulement est un palier à rouleaux conique, et **en ce que**
la formule de calcul pour déduire l'épaisseur de film d'huile h et le rapport de contact métallique α inclut : $h = \frac{4 {\left(1-α\right)}^{3} \overline{{b}^{2}}}{{R}_{tx}} {\left(\frac{1 + \sqrt{1 + Ψ}}{πΨ}\right)}^{2}$ $α = \frac{\left|{Z}_{0}\right| cos θ}{\left|Z\right| {cosθ}_{0}}$ $Ψ = - \frac{2 \left(1-α\right) \overline{{S}_{t 1}}}{{\left(πL\right)}^{2} {εn}_{1} {R}_{tx}} \left(\frac{sin θ}{kω \left|Z\right|}+\sum {C}_{3}\right)$ $\sum {C}_{3} = 2 πεL \sqrt{\frac{{R}_{tx}}{{h}_{gap}}} {\sum }_{m = 1}^{n - {n}_{1}} \left(\frac{1}{\sqrt{1 - cos \left(\frac{2 πm}{n - {n}_{1} + 1}\right)}}\right)$ et $\overline{{S}_{t 1}} = \frac{1}{{n}_{1}} {\sum }_{m = 1}^{{n}_{1}} \frac{{S}_{i 1} \left(m\right) + {S}_{o 1} \left(m\right)}{2} = 2 \overline{b} L$ dans lequel
n : nombre total d'éléments de roulement (rouleaux) dans le palier,
n₁ : nombre d'éléments de roulement (rouleaux) présents dans une zone chargée,
b : largeur de contact moyenne d'éléments de roulement (rouleau),
L : longueur d'élément de roulement (rouleau),
Rₜₓ : rayon effectif d'élément de roulement (rouleau),
Sₜ₁ : zone de contact moyenne,
Sᵢ₁(m) : zone de contact entre m éléments de roulement (rouleaux) et un anneau intérieur,
Sₒ₁(m) : zone de contact entre m éléments de roulement (rouleaux) et un anneau extérieur,
ω : fréquence angulaire de tension CA,
ε : constante diélectrique de lubrifiant,
k : nombre de roulements,
ψ : constante sans dimension,
h_{gap} : écart radial,
m : entier naturel (1 ≤ m ≤ (n - n₁)) indiquant des éléments de roulement présents dans une zone non chargée,
|Z0| : impédance dans un état de contact statique,
θ0 : phase dans un état de contact statique,
|Z| : impédance dans un état de contact dynamique, et
θ : phase dans un état de contact dynamique.
